# EUROPEAN PATENT APPLICATION

(11) **EP 1 930 293 A1**
(43) Date of publication of application: **11.06.2008**
(21) Application number: 07121705.3
(22) Date of filing: 28.11.2007
(51) Int. Cl.: C01B 3/40

(54) **Process and apparatus for the production of hydrogen gas**

(30) Priority: 05.12.2006 US 633991
(71) Applicant: Air Products and Chemicals, Inc., Allentown, PA 18195-1501 (US)
(72) Inventor: Garg, Diwakar, Emmaus, PA 18049 (US); Fogash, Kevin Boyle, Wescosville, PA 18106 (US)
(74) Representative: Schwabe - Sandmair - Marx

(57) **Abstract**

A process and apparatus for producing hydrogen from a gaseous mixture of hydrocarbons and steam are disclosed, The process includes first reacting the hydrocarbon gas and steam in the presence of a precious metal catalyst on a structural support and then reacting the resulting gas mixture in the presence of a non-precious metal catalyst The apparatus includes a vessel having an inlet and an outlet. The precious metal catalyst is supported on the structural support positioned at the inlet. The non-precious metal catalyst is supported on a support medium positioned between the structural support and the outlet. The support medium may be a granular medium or a structural support.

## Description

### BACKGROUND OF THE INVENTION

This invention relates to a process and an apparatus for the production of hydrogen containing product gas from a gaseous mixture of hydrocarbons and steam.

Hydrogen may be produced economically from hydrocarbons using the hydrogen reforming process. A well known example of this process is steam methane reforming wherein methane and steam are reacted at temperatures between 400°C and 1000°C in the presence of a metal catalyst to yield carbon monoxide and hydrogen as described in the chemical equation CH₄ + H₂O → CO + 3H₂. A part of the carbon monoxide thus produced is converted in the reforming reactor to hydrogen and carbon dioxide by the water gas shift reaction as described in the chemical equation CO + H₂O → CO₂ + H₂. The product gas containing hydrogen and carbon monoxide is treated further in a water gas shift reactor and a purification unit such as a pressure swing adsorption (PSA) unit to increase the production of hydrogen and produce pure hydrogen, respectively.

Hydrogen reforming reactors for the industrial production of hydrogen according to the aforementioned reforming process comprise a plurality of metal tubes, each being 3-6 inches in diameter and 30-40 feet long, that contain a granular medium, such as ceramic pellets which support the metal catalyst, for example nickel in the form of nickel oxide (NiO). The NiO reduces to nickel with hydrogen and/or methane or natural gas and becomes active for the hydrogen reforming reaction. Because the reforming reaction is endothermic, the tubes are heated within a furnace which maintains the temperature of the catalyst and reactants within appropriate limits to support the chemical reactions while not exceeding the temperature limits of the tubes.

The efficiency of hydrogen reforming reactors of known design is limited by poor heat transfer to the catalyst and reactants at the inlet where the gas mixture of hydrocarbons and steam enters the tubes of the reactor. The temperature is lower at the inlet, and non-precious metal catalysts such as nickel are not sufficiently active at the lower inlet temperatures thereby reducing process efficiency. Furthermore, at the lower temperatures of the inlet, the non-precious metal catalyst suffers deactivation by coke formation. There is clearly a need for an apparatus and a method that increases the efficiency of hydrogen reforming reactors for the economical production of hydrogen.

### BRIEF SUMMARY OF THE INVENTION

The invention concerns a process for producing a product gas comprising hydrogen. The process comprises:
(a) providing a first catalyst comprising a precious metal on a structural support, and a second catalyst comprising a non-precious metal on a support medium;
(b) heating the first and second catalysts;
(c) reacting a gas mixture comprising a gaseous hydrocarbon and steam in the presence of the first catalyst thereby producing a resultant gas mixture and;
(d) reacting the resultant gas mixture in the presence of the second catalyst to produce the product gas comprising hydrogen.

In the process according to the invention the gaseous hydrocarbon may be methane, natural gas, propane, petroleum gas, naphtha and mixtures thereof. The gaseous hydrocarbon may preferably be pretreated to remove sulfur and bring the sulfur level down to below about 10 parts per billion prior to reforming the gaseous hydrocarbon in the hydrogen reforming reactor. The gaseous mixture may also comprise between about 0.5% to about 15% hydrogen by volume. The precious metal may be platinum, rhodium, palladium, ruthenium, iridium and combinations thereof. The non-precious metal may comprise nickel.

The invention also includes a reactor vessel for producing a product gas comprising hydrogen from a gas mixture comprising a gaseous hydrocarbon and steam. The reactor vessel comprises a chamber, preferably an elongated tube, having an inlet for receiving the gas mixture and an outlet for discharging the hydrogen containing product gas. A structural support is positioned within the chamber between the inlet and the outlet. A precious metal catalyst is positioned on the structural support. A support medium is positioned within the chamber between the structural support and the outlet. A non-precious metal catalyst is positioned on the support medium.

In one embodiment, the structural support comprises a plurality of plates arranged within the chamber so as to permit flow of the gas mixture thorough the chamber and over the plates. The precious metal catalyst is supported on the plates, for example as a coating. In this embodiment, the support medium comprises a granular medium, for example ceramic pellets, carrying the non-precious metal catalyst. In another embodiment, the support medium may also comprise a structural support.

The invention also encompasses a reactor. The reactor comprising a furnace and a plurality of reactor vessels in the form of tubes positioned within the furnace. At least one of the tubes comprises an inlet for receiving the gas mixture and an outlet for discharging the hydrogen containing product gas. A structural support is positioned within the tube between the inlet and the outlet. A precious metal catalyst is positioned on the structural support. A support medium is positioned within the tube between the structural support and the outlet A non-precious metal catalyst is positioned on the support medium. For practical embodiments the structural support may extend from the inlet to between about 5% to about 50% of the length of the tube. The length of the precious metal catalyst zone is limited to less than about 50% of the total length of the tube to avoid exposing the precious metal catalyst to a temperature above about 800°C, and preferably above about 750°C, more preferably about 700°C, and thereby guard against premature deactivation of the catalyst by sintering and/or grain growth.

### BRIEF DESCRIPTION OF SEVERAL VIEWS OF THE DRAWINGS

Figure 1 is a sectional view of a reactor having reactor vessels according to the invention;

Figure 2 is a detailed view of a portion of Figure 1 within circle 2 on an enlarged scale; and

Figure 3 is a detailed view of a portion of Figure 1 within circle 3 on an enlarged scale.

### DETAILED DESCRIPTION OF THE INVENTION

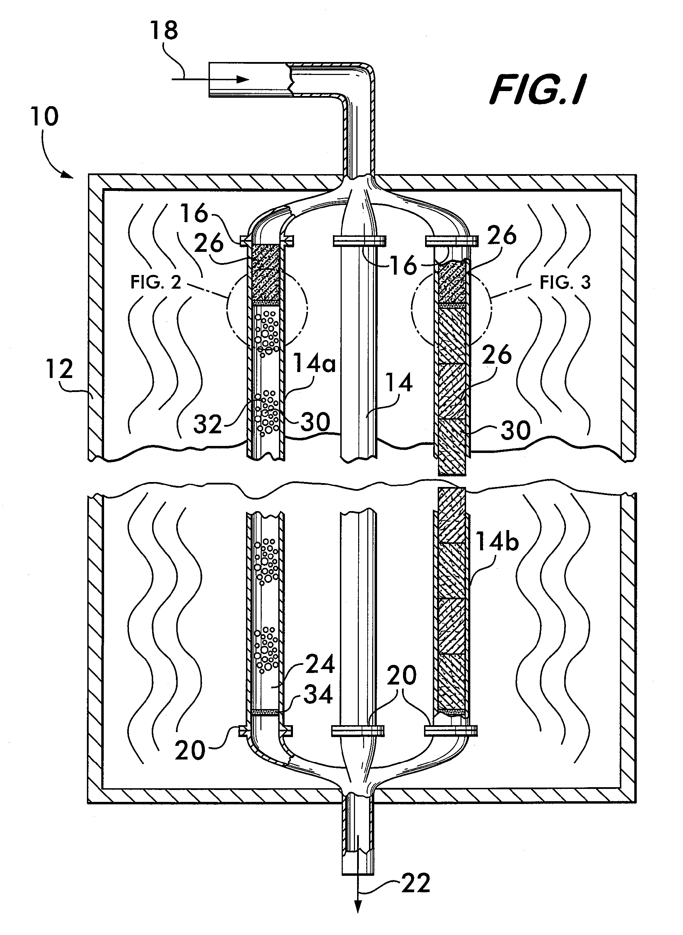

Figure 1 illustrates an embodiment of a reactor 10 for producing a product gas comprising hydrogen according to the invention. Reactor 10 comprises a furnace 12 in which a plurality of tubes 14 are positioned. The furnace can be heated electrically or by firing a suitable hydrocarbon fuel not shown in the figure. For the economical production of hydrogen on an industrial scale there may be 2 to 500 or more tubes depending upon the size of the hydrogen plant. Each tube may be about 3 to 6 inches in diameter and be about 30 to about 40 feet in length. Each tube 14 comprises a reactor vessel having an inlet 16 that receives a feed gas mixture 18 comprising a gaseous hydrocarbon and steam. Each tube also has an outlet 20 for discharge of the hydrogen containing product gas 22 that is a result of the reactions between the hydrocarbons and the steam within the tubes. The interior 24 of each tube 14 comprises a chamber in which the reactions occur which transform the feed gas mixture into the product gas. As these reactions are endothermic, the furnace 12 transfers heat to the tubes to sustain the reaction.

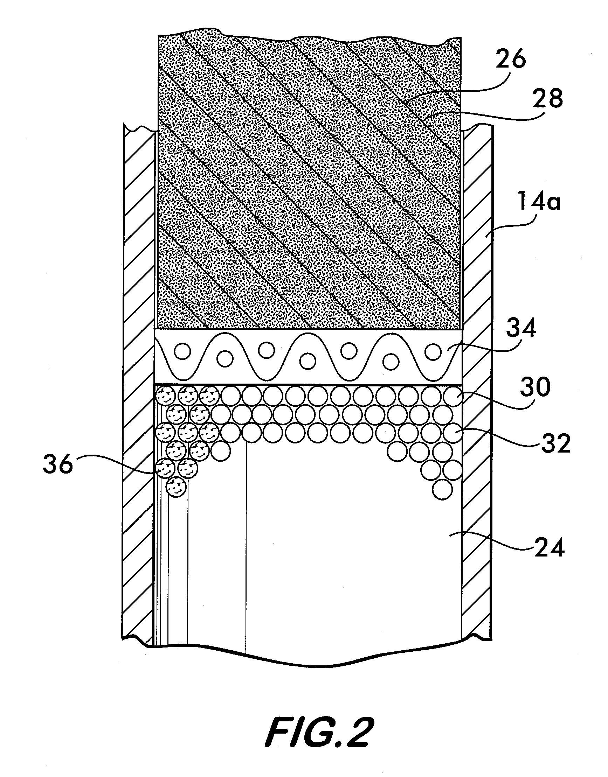

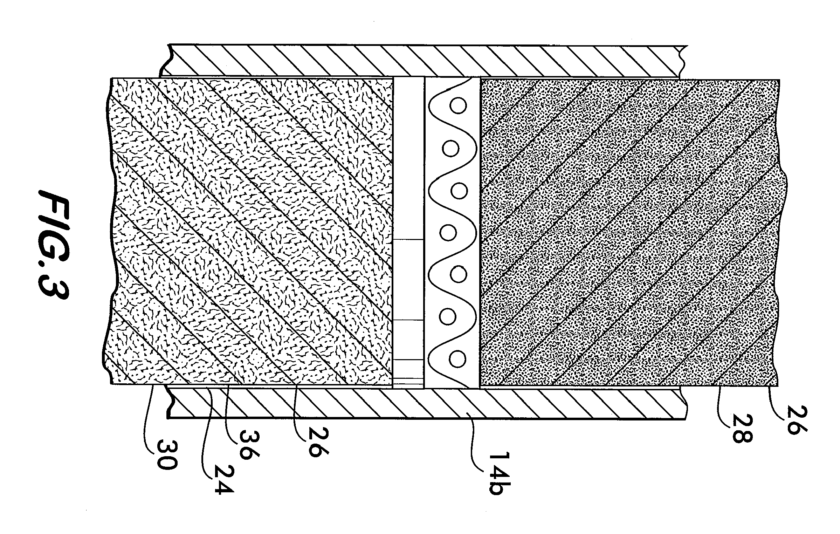

One embodiment of a reactor vessel according to the invention comprises a tube 14a having a structural support 26 (described below) positioned within the tube at the inlet 16. The structural support may extend between 5% and 50% of the length of tube 14a and supports a precious metal catalyst 28 as shown in Figure 2. With reference again to Figure 1, a support medium 30 is positioned within tube 14a between the structural support 26 and the outlet 20. In this embodiment, the support medium comprises a granular medium of ceramic pellets 32. The granular medium is retained within tube 14a by porous screens 34. In another embodiment, as depicted in tube 14b, the support medium also comprises a structural support 26. The support medium 30, whether granular or structural, supports a non-precious metal catalyst 36 as shown in Figures 2 and 3.

Reactors using reactor vessels according to the invention configured so as to present a precious metal catalyst on a structural support at the inlet of the vessel and a non-precious metal catalyst on a support medium positioned downstream of the structural support have greater efficiency and economy than reactors according to the prior art. The prior art reactor vessels are loaded primarily with non-precious metal catalyst on a ceramic granular support medium. The precious metal catalyst is positioned at the inlet where the temperature is lower due to poor heat transfer. The higher catalytic activity of the precious metal catalyst at the lower temperatures near the inlet quickly converts the heavier hydrocarbons in the feed gas and allows the entire length of the tubes to be effective at generating hydrogen from the feed gas. This results in an increase in efficiency as contrasted with reactors having non-precious metal catalysts over their entire length, where the region of the reactor near the inlet does not effectively promote the reactions which convert the feed gas into a product gas comprising hydrogen. The precious metal catalyst is also not as susceptible to fouling due to coking, and the structural support, due to its construction, promotes gas mixing and heat transfer at a greater rate than granular support media used throughout the remainder of the reactor vessel, thereby lessening the temperature difference between the region near the inlet and the rest of the vessel.

Various types of structural supports 26 are feasible for use with reactor vessels according to the invention. For example, structured materials marketed by Sulzer Chemtech Ltd. of Winterthur, Switzerland, comprise a plurality of plates configured so as to present a large surface area, deflect the gas stream to promote mixing and heat transfer, and allow gas flow at low resistance (or low pressure drop) through the vessel. The particular configuration of such structural support means varies, but includes materials having corrugations oriented angularly to the direction of gas flow, cross corrugated materials having flat plates alternating with corrugated plates as well as radial flow and cordal flow arrangements. These structural support means provide an effective support for the precious metal catalyst.

The plates of such structural support means may be formed of high temperature iron-chromium-aluminum metal alloys such as Fecralloy or ceramics such as zirconia, alumina, calcium aluminate, magnesium aluminate, magnesium aluminum silicate, titania, alumina silicate, berylia, thoria, lanthania, calcium oxide, magnesia as well as mixtures of these compounds. Other examples of structural support means include static mixing elements and other configurations having longitudinal passageways. Such structural support means for the precious metal catalyst provide high gas flow rates with minimal pressure drop. The gas hourly space velocity through such materials may range between 5,000 per hour to about 50,000 per hour.

The gas mixing, enhanced heat transfer, resistance to fouling and large surface area provided by the structural support permits smaller amounts of precious metal to be used than would otherwise be present on a granular support medium. Area densities of the precious metal on the surface of the structural support may vary between about 0.015 mg per square inch to about 15 mg per square inch. Thus, the structural support makes the use of precious metal economically feasible. The precious metal catalyst 28 positioned on the structural support 26 may include platinum, rhodium, palladium, ruthenium, iridium and combinations thereof.

The structural support made of a ceramic material may be deposited with the catalyst by any of various techniques including impregnation, adsorption, ion exchange, precipitation, co-precipitation, spraying, dip-coating, brush painting as well as other methods.

The structural support made of metal alloy may be deposited first with a ceramic washcoat. The ceramic washcoat may be selected from ceramics such as zirconia, alumina, calcium aluminate, magnesium aluminate, magnesium aluminium silicate, titania, alumina silicate, berylia, thoria, lanthania, calcium oxide, magnesia as well as mixtures of these compounds. The washcoat my be deposited with deposition and/or precipitation methods including sol-gel methods, slurry dip-coating, spray coating, brush painting as well as other methods. The washcoat may then be deposited with the catalyst by any of various techniques including impregnation, adsorption, ion exchange, precipitation, co-precipitation, spraying, dip-coating, brush painting as well as other methods.

In preparing the structural support by washcoating, a ceramic paste or washcoat is deposited on the surface of the structural support. The washcoat is then deposited or impregnated with one or more precious metals. The area density of washcoat may vary between about 15 mg per square inch and about 150 mg per square inch. The amount of precious metal may vary between about 0,1% to about 10% by weight of the washcoat.

The non-precious metal catalyst 36 is positioned on the support medium 30 which may comprise a granular medium 32 as shown in tube 14a in Figures 1 and 2. The granular medium may comprise pellets formed of ceramics such as zirconia, alumina, calcium aluminate, magnesium aluminate, magnesium aluminum silicate, titania, alumina silicate, zirconia stabilized alpha alumina, partially stabilized zirconia as well as combinations of these compounds. The non-precious metal catalyst 36 on the support medium 30 is preferably nickel, for example nickel oxide comprising between about 10% to about 25% by weight Ni. Optionally, the nickel catalyst may be promoted with potassium. Alternately, as shown in tube 14b of Figure 1, the support medium 30 on which the non-precious metal catalyst 36 is supported may comprise any of the structural support means as described above, a Sulzer-type structured material 26 being shown by way of example.

The invention also includes a process for producing a product gas comprising hydrogen from a feed gas mixture comprising hydrocarbons and steam. One example of the process is provided by the methane steam reforming reaction CH₄ + H₂O→ CO + 3H₂ wherein a methane and steam feed gas mixture is reacted in the presence of a metallic catalyst at elevated temperatures to form a product gas comprising carbon monoxide and hydrogen. Other sources of hydrocarbons that may be used in the process according to the invention include natural gas (predominantly methane but also containing hydrocarbon impurities such as ethane, propane and butane), propane, petroleum gas (primarily propane with other hydrocarbon impurities), naphtha, and combinations thereof. The feed gas may also contain between about 0.5% to about 15% hydrogen by volume to help maintain catalyst activity and longevity.

As illustrated in Figure 1, the feed gas 18, comprising a mixture of gaseous hydrocarbon and steam, enters the reactor 10 where it flows into the inlets 16 of tubes 14, 14a and 14b and first encounters the precious metal catalyst on structural supports 26. If the gaseous hydrocarbon component of the feed gas comprises natural gas, then the resultant gas mixture produced by the reaction in the presence of the precious metal catalyst is free of all heavy hydrocarbons such as ethane, propane and butane normally found in natural gas. The resultant gas mixture contains higher concentrations of hydrogen, carbon monoxide and carbon dioxide than the feed gas mixture. If the gaseous hydrocarbon component of the feed gas comprises methane, then the resultant gas mixture will comprise higher concentrations of hydrogen, carbon monoxide and carbon dioxide and a lower concentration of methane than the feed gas mixture. If the gaseous hydrocarbon component of the feed gas comprises naphtha, then the resultant gas mixture will be free of all hydrocarbons other than methane and will contain higher concentrations of hydrogen, carbon monoxide and carbon dioxide and methane than the feed gas mixture.

The resultant gas mixture continues through the structural supports and then encounters the non-precious metal catalyst on the support media 30. Heat is supplied within the furnace 12 to sustain the reactions that further convert the resultant gas mixture into the product gas 22, comprising hydrogen, that exits the tubes at the outlets 20.

The combination of the structural support and the precious metal catalyst promotes gas mixing, heat transfer, and results in high reaction rates as the feed gas enters the tubes thereby contributing to an increase in efficiency for the process according to the invention.

### Examples

The following examples illustrative of the process according to the invention are provided to show the advantages expected and believed practically realizable.

### Computer Simulations

A computer simulation was developed and used to predict hydrogen gas yield for the steam methane reforming reaction using a reactor having 40 foot reformer tubes without a precious metal catalyst compared with a reactor using 40 foot reformer tubes having a 4 foot long precious metal catalyst zone on a structural support extending along the tube from the inlet. The simulation predicted that the process according to the invention would produce 2.5% more hydrogen than the conventional process for the same heat load as measured at the fifth year of production corresponding to the point of deactivated catalyst life. In the simulation, the length of the precious metal catalyst zone was only 10% of the total length of the reforming tube. The length of the precious metal catalyst zone is limited to less than about 50% of the total length of the tube to avoid exposing the precious metal catalyst to a temperature above about 800°C, preferably above about 750°C, more preferably above about 700°C, and thereby guard against prematurely deactivating the catalyst by sintering and/or grain growth.

Table 1 shows the results of another computer simulation that modeled a conventional steam methane reforming plant using only a non-precious metal granular catalyst (single catalyst), and a plant using a precious metal catalyst on a structural support in combination with a non-precious metal granular catalyst according to the invention. In this simulation the product gas flow rate was determined as a function of three different furnace heat loads while the product gas outlet temperature was maintained at 1,600°F (871°C). The simulation predicted that plants using the combination of precious and non-precious metal catalysts (Dual Catalyst Cases) will achieve hydrogen containing product gas flow rates as high as 6% greater than the plants using the single catalyst while maintaining a lower reformer tube temperature.

**Table 1 - Comparison of Conventional (Non-Precious Metal Granular) Catalyst and Precious Metal and Non-Precious Metal Catalysts (Dual Catalyst) Reforming Operations**

| | Base Case | Dual Catalyst Case 1 | Dual Catalyst Case 2 | Dual Catalyst Case 3 |
|---|---|---|---|---|
| Methane Slip (Dry % of Methane in Product Gas) | 644 | 6.44 | 6.45 | 6.45 |
| Furnace Heat Load (MMBtu/Hr) | 389 | 397 | 405 | 413 |
| Process Outlet Temperature (F) | 1600 | 1800 | 1600 | 1600 |
| Max Tube Wall Temperature (F) | 1729 | 1693 | 1896 | 1699 |
| Hydrogen Containing Product Gas Flow (lb-mole/hr) | 12,395 | 12,643 | 12,888 | 13,133 |
| Hydrogen Containing Product Gas Production Relative to Base Case | 1.0 | 1.02 | 1.04 | 1.06 |

### Reforming Experiment

A 0.375" inside diameter micro-reactor was used to compare the steam-methane reforming activity of a commercially available nickel reforming catalyst with a precious metal catalyst under operating conditions typically present at the entrance section of a reforming tube. A thin metal sheet deposited with catalyst was used to simulate a structural support according to the invention.

### Nickel Catalyst Procedure

The commercially available nickel reforming catalyst was loaded into the reactor and was heated to approximately 500ºC (set point temperature) under a flowing mixture of 50% by volume nitrogen and 50% by volume hydrogen at a constant operating pressure of 400 psig. The catalyst was reduced or conditioned for two hours under the flow of the 50/50 nitrogen and hydrogen mixture. Thereafter, flow of a mixture containing 3,000 sccm of steam, 1000 sccm of methane and 50 or 300 sccm of hydrogen was initiated through the reactor to undergo the reforming reaction. The reforming reaction was carried at the set point temperatures of 600ºC and 650ºC. The internal reactor temperature was always lower than the set point temperature due to endothermic nature of the reforming reaction. The product gas composition and flow rate and catalyst temperature were recorded periodically to perform the material balance and determine methane conversion and rate of reaction,

The commercially available nickel reforming catalyst contained approximately 24% nickel in the form of NiO The catalyst was supported on a granular calcium aluminate support medium, and was promoted with potassium. Because of the large size of the commercially available nickel catalyst pellets, they were crushed and sieved to an average particle size of 0.33 mm prior to using them in the micro-reactor.

### Precious Metal Catalyst Procedure

The precious metal catalyst was supported on thin strips of Fecralloy, an alloy of iron, chromium and aluminum. The strips were coated with an alumina-zirconia washcoat and then loaded with 1.5 wt.% rhodium based on the weight of the washcoat. The precious metal catalyst was promoted with potassium as well..

### Experimental Results - Nickel Catalyst Examples 1 and 2

A small amount (0.043 g) of 0.33 mm size commercial nickel catalyst diluted with inert alumina particles was loaded into the reactor. The general reforming procedure described above was used to determine the activity of the commercially available nickel reforming catalyst for reforming methane at two different set point temperatures. The catalyst temperature and reforming results obtained in these examples are summarized in Table 2 below.

**Table 2 - Reforming Results with Commercial Nickel Catalyst**

| Example Number | Set Point Temp., ºC | Catalyst Temp., ºC | Methane Conversion % | Reaction rate, mole/hr-g cat |
|---|---|---|---|---|
| 1 | 600 | 589 | 2.9 | 1.68 |
| 2 | 650 | 633 | 5.9 | 3.40 |

The rate of reaction was about 1.68 mole/hr-g cat at the set point temperature of 600ºC. The reaction rate increased to 3.40 mole/hr-g cat when the set point temperature was raised to 650ºC.

### Experimental Results - Precious Metal Catalyst Examples 3 and 4

A 16 mm wide and 90 mm long strip of metal coated with washcoat and deposited with rhodium catalyst on both sides was tri-folded into Z shape and loaded into the reactor. The combined weight of washcoat and rhodium catalyst on this strip was approximately 0.133 g. The general reforming procedure described above was used to determine activity of the rhodium catalyst for reforming methane. The catalyst temperature and reforming results obtained are summarized in Table 3 below.

**Table 3 - Reforming Results with Rhodium Catalyst on a Structural Support**

| Example Number | Set Point Temp., ºC | Catalyst Temp., ºC | Methane Conversion % | Reaction rate, mole/hr-g cat |
|---|---|---|---|---|
| 3 | 600 | 571 | 12.5 | 2.53 |
| 4 | 650 | 614 | 18.7 | 3.81 |

The overall conversion of methane with rhodium catalyst was 12.5%, which was considerably higher than the value noted with nickel catalyst. However, since the amount of nickel catalyst used in Examples 1 and 2 was different from the amount of rhodium catalyst used in Examples 3 and 4, the actual difference between the two catalysts could be more properly discerned by comparing activities per unit mass of the catalyst. The reaction rate data determined by calculating moles of methane converted per unit time and per unit mass of the catalyst is also summarized in Tables 2 and 3. The data clearly showed that rhodium catalyst was much more active for reforming reaction than nickel catalyst at both the 600ºC and 650ºC set point temperatures.

## Claims

1. A process for producing a product gas comprising hydrogen, said process comprising:
providing a first catalyst comprising a precious metal on a structural support, and a second catalyst comprising a non-precious metal on a support medium;
heating said first and second catalysts;
reacting a gas mixture comprising a gaseous hydrocarbon and steam in the presence of said first catalyst thereby producing a resultant gas mixture; and
reacting said resultant gas mixture in the presence of said second catalyst to produce the product gas comprising hydrogen.

2. A process according to Claim 1, wherein said gaseous hydrocarbon is selected from the group consisting of methane, natural gas, propane, petroleum gas, naphtha and mixtures thereof.

3. A process according to Claim 1, wherein said gaseous mixture comprises between about 0.5% to about 15% hydrogen by volume.

4. A process according to Claim 1, wherein said precious metal is selected from the group consisting of platinum, rhodium, palladium, ruthenium, iridium and combinations thereof.

5. A process according to Claim 1, wherein said non-precious metal comprises nickel.

6. A reactor vessel for producing a product gas comprising hydrogen from a gas mixture comprising a gaseous hydrocarbon and steam, said reactor vessel comprising:
an elongated tube having an inlet for receiving said gas mixture and an outlet for discharging said hydrogen containing product gas;
a structural support positioned within said tube between said inlet and said outlet;
a precious metal catalyst positioned on said structural support;
a support medium positioned within said tube between said structural support and said outlet;
a non-precious metal catalyst positioned on said support medium.

7. A reactor vessel according to Claim 6, wherein said elongated tube has a diameter between about 3 inches and about 6 inches and a length between about 30 feet and about 40 feet.

8. A reactor vessel according to Claim 6, wherein said structural support comprises a plurality of plates arranged within said tube so as to permit flow of said gas mixture through said tube and over said plates, said precious metal catalyst being supported on said plates.

9. A reactor vessel according to Claim 8, wherein said precious metal catalyst is present on said plates at an area density between about 0.015 mg per square inch and about 15 mg per square inch.

10. A reactor vessel according to Claim 6, wherein said support medium comprises a granular medium carrying said non-precious metal catalyst.

11. A reactor vessel according to Claim 10, wherein said granular medium comprises a ceramic selected from the group consisting of zirconia, alumina, calcium aluminate, magnesium aluminate, magnesium aluminum silicate, titania, alumina silicate, zirconia stabilized alpha alumina, partially stabilized zirconia and combinations thereof.

12. A reactor vessel according to Claim 6, wherein said support medium comprises a plurality of plates arranged within said tube so as to permit flow of said gas mixture thorough said reactor and over said plates, said non-precious metal catalyst being supported on said plates.

13. A reactor vessel according to Claim 6, wherein said precious metal catalyst is selected from the group consisting of platinum, rhodium, palladium, ruthenium, iridium and combinations thereof.

14. A reactor vessel according to Claim 6, wherein said non-precious metal catalyst comprises nickel.

15. A reactor for producing a product gas comprising hydrogen from a gas mixture comprising a gaseous hydrocarbon and steam, said reactor comprising:
a furnace;
a plurality of reactor vessels positioned within said furnace, at least one of said reactor vessels comprising:
a chamber having an inlet for receiving said gas mixture and an outlet for discharging said hydrogen containing product gas;
a structural support positioned within said chamber between said inlet and said outlet;
a precious metal catalyst positioned on said structural support;
a support medium positioned within said chamber between said structural support and said outlet;
a non-precious metal catalyst positioned on said support medium.

16. A reactor according to Claim 15, wherein said chamber comprises an elongated tube.

17. A reactor according to Claim 16, wherein said structural support extends from said inlet between about 5% to about 50% of the length of said tube.

18. A reactor according to Claim 15, wherein said structural support comprises a plurality of plates arranged within said chamber so as to permit flow of said gas mixture thorough said chamber and over said plates, said precious metal catalyst being supported on said plates.

19. A reactor vessel according to Claim 18, wherein said precious metal catalyst is present on said plates at an area density between about 0.015 mg per square inch and about 15 mg per square inch.

20. A reactor according to Claim 15, wherein said support medium comprises a granular medium carrying said non-precious metal.

21. A reactor according to Claim 20, wherein said granular medium comprises a ceramic selected from the group consisting of zirconia, alumina, calcium aluminate, magnesium aluminate, magnesium aluminum silicate, titania, alumina silicate, zirconia stabilized alpha alumina, partially stabilized zirconia and combinations thereof.

22. A reactor according to Claim 15, wherein said support medium comprises a plurality of plates arranged within said chamber so as to permit flow of said gas mixture thorough said chamber and over said plates, said non-precious metal catalyst being supported on said plates.

23. A reactor according to Claim 15, wherein said precious metal catalyst is selected from the group consisting of platinum, rhodium, palladium, ruthenium, iridium and combinations thereof.

24. A reactor according to Claim 15, wherein said non-precious metal catalyst comprises nickel.

25. A reactor vessel for producing a product gas comprising hydrogen from a gas mixture comprising a gaseous hydrocarbon and steam, said reactor vessel comprising:
an elongated tube having an inlet for receiving said gas mixture and an outlet for discharging said hydrogen containing product gas;
a structural support means positioned within said tube between said inlet and said outlet;
a precious metal catalyst positioned on said structural support means;
a support medium positioned within said tube between said structural support means and said outlet;
a non-precious metal catalyst positioned on said support medium.

26. A reactor vessel according to Claim 25, wherein said support medium comprises a structural support means.

27. A reactor vessel according to Claim 25, wherein said support medium comprises a granular medium.

28. A reactor vessel according to Claim 25, wherein said structural support means extends within said tube from said inlet between about 5% to about 50% of the length of said tube, said support medium occupying the remainder of said tube.
